# EUROPÄISCHE PATENTSCHRIFT

(11) **EP 3 471 913 B1**
(45) Veröffentlichungstag und Bekanntmachung des Hinweises auf die Patenterteilung: **13.05.2020**
(21) Anmeldenummer: 18713828.4
(22) Anmeldetag: 19.03.2018
(51) Int. Cl.: B23K 26/40, B23K 26/364, B23K 26/03, B23K 26/70

(54) **VERFAHREN ZUM EINBRINGEN EINER DEFINIERTEN SCHWÄCHUNGSLINIE MIT EINEM GEPULSTEN LASERSTRAHL DURCH MATERIALABTRAG AN EINEM ÜBERZUGSMATERIAL**
METHOD FOR INTRODUCING A DEFINED WEAKENING LINE BY MEANS OF A PULSED LASER BEAM VIA MATERIAL REMOVAL ON A COVER MATERIAL
PROCÉDÉ POUR PRATIQUER UNE LIGNE D'AFFAIBLISSEMENT DÉFINIE, AU MOYEN D'UN RAYON LASER PULSÉ, PAR ENLÈVEMENT DE MATIÈRE, SUR UN MATÉRIAU DE REVÊTEMENT

(30) Priorität: 12.04.2017 DE 102017107935
(43) Veröffentlichungstag der Anmeldung: 24.04.2019
(73) Patentinhaber: Eissmann Automotive Deutschland GmbH, 72574 Bad Urach (DE)
(72) Erfinder: DRECHSEL, Jan, 01139 Dresden (DE); EBERT, Robby, 09114 Chemnitz (DE)
(74) Vertreter: Mammel und Maser
(86) Internationale Anmeldenummer: PCT/EP2018/056813
(87) Internationale Veröffentlichungsnummer: WO 2018/188899

(56) Entgegenhaltungen:
- EP-A1- 3 120 966
- WO-A1-2004/071704
- US-A1- 2003 019 848

## Beschreibung

Die vorliegende Erfindung betrifft ein Verfahren zum Einbringen einer definierten Schwächungslinie mit einem gepulsten Laserstrahl durch Materialabtrag an einem Überzugsmaterial. Überzugsmaterialien mit eingebrachten Schwächungen werden im Automobilbereich eingesetzt, beispielsweise zur Herstellung von Überzügen für Airbags.

Airbags sind heutzutage in Kraftfahrzeugen an verschiedenen Stellen, zum Beispiel in Lenkrädern, Armaturenbrettern, Türen, Sitzen, Dachverkleidungen usw., integriert. Für eine zuverlässige Funktionsweise des Airbags ist es notwendig, dass der Kunststoffträger in allen seinen Schichten eine bzw. mehrere Materialschwächungen, sogenannte Sollbruchstellen, aufweist, die den Schusskanal des Airbags definieren.

Aus optischen Gründen beziehungsweise wegen des Designs fordern die Kraftfahrzeughersteller, dass beispielsweise der Beifahrerairbag, der im Armaturenbrett integriert ist, auf der dem Insassen zugewandten Seite hin unsichtbar gestaltet ist. Dazu wird das Armaturenbrett mit der darin integrierten Airbagklappe mit einem Überzugsmaterial versehen, das im Bereich der Berandung der Airbagklappe eine Schwächungslinie aufweist, so dass die sichere Öffnung der Airbagklappe und die Entfaltung des Airbags bei einem Aufprall gewährleistet bleibt.

Das Öffnen des Überzugsmaterials entlang der Schwächungslinie muss zudem innerhalb eines vorgegebenen Zeitfensters erfolgen. Ebenso muss ein unkontrollierter Partikelflug durch umherfliegende Bruchstücke des Überzugs auf jeden Fall vermieden werden.

Solche Überzugsmaterialien für Airbags sind aus unterschiedlichen Materialien bekannt, beispielsweise aus Kunststofffolien, Bezugsstoffen, Textilien, Slush, Kunstleder oder faserigen Materialien wie Naturleder. Gerade bei gehobenen Fahrzeugausstattungen werden die Überzüge häufig aus Naturleder hergestellt. Das im Automobilbereich eingesetzte Leder besteht aus einer Oberhaut und einer Lederhaut. Aufgrund der Dickenschwankungen des Leders und der verhältnismäßig geringen Dicke der Oberhaut wird bei der Erzeugung von Schwächungen in dem Leder durch Einschneiden in die Rückseite des Leders mit einem Messer oder einer Klinge häufig eine Schnitttiefe gewählt, bei der die Oberhaut unverletzt bleibt. Die natürlichen Schwankungsbreiten der unverletzten Oberhaut führen allerdings zu einer starken Schwankungsbreite der Reißfestigkeit.

Gerade bei Sollbruchlinien für Airbagabdeckungen sind die Anforderungen an eine reproduzierbare und geringe Reißfestigkeit besonders hoch, die bei einem mechanischen Einschneiden nicht immer erfüllt werden kann.

Es wurde bereits vorgeschlagen, in das Leder voneinander beabstandete linienförmige Perforationen einer Länge von weniger als 0,8 mm einzubringen, wie in der EP 1 750 978 B1 beschrieben. Ein auf diese Weise geschwächtes Leder weist aufgrund der minimalen Größe der eingebrachten Perforationen, die in der Größe der Lederporen liegen, im Wesentlichen unsichtbare Schwächungen bei guten Aufreißeigenschaften auf, wobei die Schwächungen insbesondere mit einer Klinge eingebracht werden.

Zudem ist bekannt, Schwächungslinien insbesondere auch in Airbagüberzugsmaterialien oder in Dekorschichten für Airbagabdeckungen mittels Lasern zu perforieren. Zum gezielten Schwächen von Leder mittels UV-Laserstrahlung werden Mikrolöcher in das Material eingebracht. Diese sind im Allgemeinen entlang einer Bahn angeordnet und bilden dadurch eine definierte Schwächungslinie. Die Bestrahlung erfolgt auf die Rückseite, die sogenannte Fleischseite des Leders, so dass die Vorder- bzw. Oberseite des Leders durch die Laserstrahlung nur minimal geschädigt wird.

Die Mikrolöcher werden im Allgemeinen durch mehrfache Bestrahlung mit einzelnen Laserpulsen generiert. Da Leder ein sehr inhomogenes Material ist, schwankt die Anzahl der Laserpulse, die zum vollständigen Durchbohren des Leders notwendig sind, erheblich, die Abweichungen betragen etwa ± 50 % vom Mittelwert.

Für eine definierte und sichere Perforation ist das vollständige oder nahezu vollständige Durchbohren des Leders jedoch unabdingbar.

Wird das Leder an der Stelle eines Mikrolochs jedoch weiter bestrahlt, obwohl schon eine vollständige Durchbohrung erfolgt ist, so stellt sich sehr schnell eine unerwünschte lokale Verfärbung und Aufhärtung des Leders ein.

Um Veränderungen in der Faserstruktur des Leders, die zur Aufwerfung und damit zur Sichtbarkeit der Schwächungslinie führen, zu vermeiden, wurde beispielsweise vorgeschlagen, das Leder vor der Laserbearbeitung entweder zu unterkühlen oder vorzuschrumpfen oder es mit einem speziellen Fixiermittel auf der Rückseite zu behandeln, wie in der WO 2005/049261 beschrieben.

Die DE 196 36 429 C1 beschreibt ein Verfahren zur Erzeugung einer Schwächungslinie in einem Überzugsmaterial durch einseitiges örtliches Abtragen des Überzugsmaterials in Form von Sacklöchern mittels steuerbarer gepulster Laserstrahlung, wobei eine Relativbewegung zwischen der Laserstrahlung und dem Überzugsmaterial in Richtung der zu erzeugenden Schwächungslinie erfolgt und die durch den Boden des jeweiligen Sacklochs transmittierte Laserstrahlung nach jedem Laserpuls mittels eines Sensors detektiert, der Integralwert gebildet und mit einem Sollwert verglichen wird und die Laserstrahlung bei Erreichen des Sollwertes abgeschaltet und nach erfolgter Relativbewegung beim nächsten noch zu schwächenden Sackloch wieder angeschaltet wird.

Eine solche Bestimmung der Restwandstärke mittels einer Transmissionsmessung macht es allerdings erforderlich, dass der Sensor bzw. die Fotodiode der Position des Laserstrahls folgt. Um an jedem Auftreffort den Laserpuls messen und den Laser gegebenenfalls abschalten zu können, wird die Fotodiode entsprechend der Bewegung des Laserstrahls auf der Sichtseite des Überzugsmaterials mitbewegt. Dieses Verfahren ist jedoch beim Einsatz von hochrepetierenden Lasern nicht realisierbar, da sich die Fotodiode nicht in der erforderlichen Geschwindigkeit mit der erforderlichen Genauigkeit bewegen lässt.

Die DE 103 05 875 A1 lehrt ein Verfahren zur Prozesssicherheit eines Bohrprozesses, wobei ein Laserstrahl einen Bereich eines Werkstücks beaufschlagt und ein Messstrahl auf die sich in der Entstehung befindlichen Bohrung innerhalb dieses Bereiches gerichtet wird.

Aus der EP 2 962 800 A2 ist ein Verfahren zum Einbringen einer definierten Schwächungslinie bekannt, bei dem ein gepulster Laserstrahl aus einem Laser auf die Rückseite eines Überzugsmaterials gerichtet und entlang einer Bahn geführt wird. Unterhalb der Sichtseite des Überzugsmaterials ist eine Beobachtungseinheit angeordnet.

Die DE 10 2013 104 138 B3 lehrt ein Verfahren, bei dem die optische und haptische Veränderung des mittels eines Laserstrahls geschwächten Leders dadurch verhindert werden soll, dass der Laserstrahl linienförmig an der Rückseite des Leders geführt wird und das linienförmige Führen ein mehrfaches Wiederholen einer Abtastbewegung ist, bei der entlang der Linie jeweils pro Auftreffort nur ein Laserpuls abgegeben wird. Die Parameter des Laserimpulses sind dabei so gewählt, dass dieser einen Energieeintrag bewirkt, der am jeweiligen Auftreffort zu einer Erwärmung des Überzugsmaterials auf eine Temperatur oberhalb einer Ablationsschwelle führt, jedoch die Temperatur in an den jeweiligen Auftrefforten angrenzenden Bereichen des Überzugsmaterials unterhalb einer Grenztemperatur liegt.

Die Kontrolle der Restwandstärke erfolgt ebenfalls mit einer Fotodiode, die dem Kurzpulslaser in Richtung des Laserstrahls gegenüberstehend auf der Sichtseite des faserigen Überzugsmaterials angeordnet ist. Die Fotodiode misst kontinuierlich die Stärke eines durch das faserige Überzugsmaterial transmittierenden Anteils der Laserpulse, so dass der Laserstrahl beim Erreichen der gewünschten minimalen Restwandstärke noch vor einem vollständigen Durchtritt durch das faserige Überzugsmaterial abgeschaltet werden kann. Ist an einem Auftreffort bereits die minimale Restwandstärke erreicht, erfolgt bei der nächsten Abtastbewegung eine lokale Abschaltung des Laserstrahls an diesem Auftreffort.

Damit die Abtastbewegung entfallen kann, ist entlang der Abtastbahn eine Vielzahl von aneinandergereihten Fotodioden vorgesehen. Bei diesem Verfahren muss der Sensor räumlich hochauflösend sein (mindestens im Bereich des Lochabstands der Perforationslinie), und er muss die Größe des zu bearbeitenden Perforationsabschnitts besitzen.

Der Einsatz von Infrarot-Kurzpulslasern ist jedoch wegen thermischer Randbelastung entlang des Auftreffortes des Laserstrahls von Nachteil. Zudem ist das mit dem Laserprozess erreichte Ergebnis vom Zustand des Überzugmaterials, beispielsweise im Leder vorhandene Feuchtigkeit, abhängig.

Wesentlich schonender und definierter lassen sich die Überzugsmaterialien mit UV-Laserstrahlung bearbeiten, wie in der DE 10 2008 053 213 B4 beschrieben. Allerdings wird UV-Laserstrahlung stark von den Materialien absorbiert. Somit muss das Überzugsmaterial vollständig vom Laser durchbohrt werden, damit die UV-Strahlung mit der Beobachtungseinheit, die unterhalb der Sichtseite des Überzugsmaterials vorgesehen ist, überhaupt detektiert werden kann. Ein Verfahren zum Einbringen einer definierten Schwächungslinie durch Materialabtrag an einem Überzugsmaterial zur Herstellung eines Airbags gemäß dem Oberbegriff des Anspruchs 1 ist aus der US 2003/0019484 A1 bekannt.

Die Aufgabe der vorliegenden Erfindung besteht darin, die Verfahren zur Einbringung von Schwächungslinien mittels eines gepulsten Laserstrahls durch Materialabtrag an einem Überzugsmaterial, insbesondere Leder, dahingehend zu verbessern, dass hinreichend geschwächte Überzugsmaterialien mit im Wesentlichen unsichtbaren Schwächungslinien erhalten werden.

Diese Aufgabe wird erfindungsgemäß bei einem Verfahren zum Einbringen einer definierten Schwächungslinie durch Materialabtrag an einem Überzugsmaterial, das eine Sichtseite und eine der Sichtseite gegenüberliegende Rückseite aufweist, bei dem ein gepulster Laserstrahl aus einem Laser auf die Rückseite des Überzugsmaterials gerichtet und entlang einer Bahn geführt wird und unterhalb der Sichtseite des Überzugsmaterials wenigstens eine Beobachtungseinheit zur Überwachung des Schwächungsprozesses vorgesehen ist dadurch gelöst, dass ein zweiter Laserstrahl aus einem zweiten Laser in den Strahlengang des ersten Laserstrahls eingekoppelt wird, wobei der erste gepulste Laserstrahl dazu dient, die Schwächungslinie zu erzeugen, und wobei die auf der Sichtseite austretende Strahlung des zweiten Laserstrahls von der wenigstens einen Beobachtungseinheit detektiert wird.

Wesentlich ist, dass zwei Laserstrahlen gemeinsam bzw. gleichzeitig oder im Wesentlichen gleichzeitig genutzt werden. Mit dem ersten Laserstrahl, der vorzugsweise ein UV-Laserstrahl ist, lässt sich das Material schonend und schnell bearbeiten, da diese Strahlung sehr gut absorbiert wird. Der zweite Laserstrahl ist langwelliger und somit auch energieärmer als der erste Laserstrahl und vorzugsweise ein sichtbarer oder Nahinfrarot-Laserstrahl (NIR-Laserstrahl).

NIR-Laserstrahlung kann das Material durchstrahlen. Deshalb ist die Wellenlänge für die Laserbearbeitung nicht so gut geeignet. In Abhängigkeit von der Dicke der Restwand ändert sich die Intensität der auf der Sichtseite des Überzugsmaterials austretenden Strahlung, so dass die Intensität dieser Wellenlänge sehr gut zur Messung der Dicke der Restwand geeignet ist. Da die NIR-Laserstrahlung nicht gleichzeitig zur Bearbeitung des Überzugsmaterials genutzt wird, ist die Messung der durch das Überzugsmaterial transmittierten Strahlung des zweiten Lasers sehr genau.

Das Überzugsmaterial kann sowohl schonend bearbeitet (UV-Laserstrahlung) als auch die Dicke der Restwand genau gemessen werden (NIR-Laserstrahlung).

Die Energie des ersten gepulsten Laserstrahls trägt bei jedem Puls am Auftreffort auf der Rückseite des Überzugsmaterials, beispielsweise im Falle von Leder auf der Fleischseite, Material ab. Das Überzugsmaterial wird am Auftreffort der Laserstrahlen durch den Materialabtrag immer mehr geschwächt, so dass die Schichtdicke des Überzugsmaterials am Auftreffort bei jedem Puls reduziert wird. Sobald eine Restwand ausreichend dünn ist, tritt ein messbarer Anteil der Laserstrahlung des zweiten Lasers durch die verbleibende Restwand hindurch und trifft direkt oder indirekt auf die wenigstens eine Beobachtungseinheit, die die Intensität des auftreffenden Laserlichts misst.

Je nach gewünschter endgültiger Restwanddicke kann das Verfahren gestoppt oder fortgeführt werden, bis die gewünschte endgültige Restwanddicke erreicht ist.

Die zu erzielende Dicke der Restwand hängt von der gewünschten Reißfestigkeit ab und liegt im Allgemeinen zwischen 1 Mikrometer und 200 Mikrometer und vorzugsweise zwischen 10 und 30 Mikrometer.

Der zweite Laserstrahl kann gepulst oder nicht gepulst sein. Er wird in den ersten Laserstrahl eingekoppelt, d.h. der Strahlengang des ersten Laserstrahls und des zweiten Laserstrahls ist identisch oder nahezu identisch, so dass der erste und der zweite Laserstrahl auf denselben Auftreffort auf der Rückseite des Überzugsmaterials auftreffen und in dasselbe Loch eindringen.

Die Überschreitung eines bestimmten Schwellwerts der Intensität der detektierten Strahlung des zweiten Lasers zeigt an, dass die Restwand im Loch hinreichend geschwächt ist, so dass bei der nächsten Abtastbewegung eine lokale Abschaltung des ersten Lasers an diesem Auftreffort erfolgt. Ebenfalls kann auch der zweite Laser lokal an diesem Auftreffort abgeschaltet werden.

Die Intensität des zweiten Lasers bei kontinuierlicher Bestrahlung bzw. die Energie des zweiten Lasers bei gepulster Bestrahlung ist weitaus geringer als die des ersten Lasers, da der zweite Laser nicht zum Bohren von Löchern sondern nur zur Detektion dient. Dabei wird die Intensität bzw. die Energie des zweiten Lasers so hoch gewählt, dass einerseits ein Messsignal erhalten werden kann, und so niedrig, dass andererseits am Überzugsmaterial keine Schädigung auftritt.

Hierdurch werden auch Materialveränderungen durch eine zu hohe Energiedichte des zweiten Lasers und ein Verspröden vermieden.

Erfindungsgemäß wird unter Strahlengang des ersten Lasers der Verlauf des vom ersten Laserstrahl durchquerten Wegs verstanden. So kann der zweite Laserstrahl auch dann in den Strahlengang des ersten Laserstrahls eingekoppelt sein, wenn der erste Laser abgeschaltet ist oder die Pulse des ersten und zweiten Lasers zeitlich versetzt zueinander sind.

Erfindungsgemäß handelt es sich bei den Löchern im Überzugsmaterial um Sacklöcher.

In einer bevorzugten Variante fällt der erste gepulste Laserstrahl aus dem Laser zunächst über einen Spiegel und eine Scanvorrichtung auf die Rückseite des Überzugsmaterials, wobei der Laserpuls durch die Scanvorrichtung entlang der Bahn geführt wird. Die Scanvorrichtung dient dazu, den Laserstrahl auf der Rückseite des Leders entlang auf der gewünschten Bahn zu bewegen.

Vorteilhafterweise wird der zweite Laserstrahl über einen semitransparenten Spiegel in den Strahlengang des ersten Laserstrahls eingekoppelt. Der semitransparente Spiegel ist für den ersten Laserstrahl durchlässig, für den zweiten Laserstrahl jedoch nicht, so dass der zweite Laserstrahl in den ersten Laserstrahl eingespiegelt werden kann. Ebenso kann der semitransparente Spiegel durchlässig für den zweiten Laserstrahl sein und undurchlässig für den ersten Laserstrahl, so dass der erste Laserstrahl in den Strahlengang des zweiten Lasers eingespiegelt wird. Bevorzugt werden die beiden Laserstrahlen miteinander gekoppelt, bevor sie in die Scaneinrichtung gelangen.

Im Allgemeinen umfassen Scanvorrichtungen einen Scankopf mit einer Treiber- und Ansteuerelektronik. Im Scankopf wird der Laserstrahl bzw. der gekoppelte Laserstrahl abgelenkt, dessen Ablenkungswinkel gemessen und (meistens) elektronisch geregelt. Im Allgemeinen sollten die Ablenkgeschwindigkeit, der Arbeitsabstand zu dem Überzugsmaterial, die Bearbeitungsgeometrie und die Anzahl der Überfahrten (Wiederholungen des Bearbeitungszyklus') bei der zu verwendenden Scanvorrichtung veränderbar sein. Die einfachste Methode, um eine Scanbewegung zu erzeugen, ist die Veränderung der Orientierung eines Spiegels.

Die Beobachtungseinheit dient dazu, den Laserprozess, d.h. das Bohren der Sacklöcher, zu überwachen. Die Beobachtungseinheit kann beispielsweise ein Kamera- oder Fotodiodensystem sein. Ebenfalls ist möglich, ein oder mehrere Fotodioden oder andere Beobachtungseinheiten vorzusehen. Die Beobachtungseinheit ist vorzugsweise unterhalb der Sichtseite des Überzugsmaterials angeordnet. Die Größe der Beobachtungseinheit kann beispielsweise 50 mm x 35 mm x 15 mm betragen, Die Beobachtungseinheit ist vorzugsweise eine Silizium-Fotodiode mit einer Empfindlichkeit zwischen 200 nm und 1100 nm. Die lichtempfindliche Fläche kann beispielsweise 13 mm² umfassen und eine Empfindlichkeit von 0,3 A/W.

Damit nicht eine Vielzahl von Beobachtungseinheiten verwendet oder die Beobachtungseinheit nachgeführt werden muss, damit die Intensität der Strahlung unterhalb des Auftrittsorts der zweiten Laserstrahlung gemessen werden kann, ist vorzugsweise unterhalb der Sichtseite des Überzugsmaterials eine Hohlkammer vorgesehen, die eine streuende und/oder reflektierende Innenfläche aufweist.

Die wenigstens eine Beobachtungseinheit kann somit an der Hohlkammer vorgesehen sein, zum Beispiel seitlich.

Das erfindungsgemäße Verfahren lässt sich auch bei hochdynamischen Laser-Prozessen einsetzen, da die Hohlkammer stationär ist und nicht, wie es bei den aus dem Stand der Technik bekannten Sensoren bekannt ist, entsprechend der Bewegung des Laserstrahls bewegt werden muss. Um den Materialabtrag über die gesamte entlang einer Bahn angeordneten Löcher überwachen zu können, sollte sich die Hohlkammer auf der Sichtseite des Leders wenigstens entlang der gesamten mit dem Laser zu bearbeitenden Bahn erstrecken.

Vorzugsweise ist die Hohlkammer im Wesentlichen rechteckig, wobei das Überzugsmaterial, insbesondere Leder, mit seiner Sichtseite auf der nach oben weisenden Außenfläche der Hohlkammer aufliegt. In der nach oben weisenden Seite der Kammer ist ein Schlitz. Die Bewegung des Lasers erfolgt entlang dem Schlitz, so dass das durch das Überzugsmaterial transmittierende Laserlicht des zweiten Laserstrahls in den Innenraum der Hohlkammer eintreten kann.

Die Innenfläche der Hohlkammer sollte für die Strahlung des zweiten Lasers ein hohes Reflexionsvermögen aufweisen und möglichst wenig absorbieren, um bei einem jeden, auch von der Fotodiode maximal entfernten Loch noch genügend Licht auf die Fotodiode zu streuen/reflektieren.

Diese bevorzugte Variante zeichnet sich durch eine hohe Signalstärke aus.

Die durch die Beobachtungseinheit, insbesondere Fotodioden, detektierte Strahlungsintensität des zweiten Lasers wird als Trigger für den Prozessabbruch genutzt. Die Zuordnung des Messsignals zum Auftreffort wird über die Synchronisation der Laserstrahlquellen, Scanvorrichtung, Beobachtungseinheit und der Laserpulssteuerung bzw. Laserpulsabschaltvorrichtung realisiert, so dass der Ort, an dem die Laserstrahlung auf die Innenfläche der Hohlkammer auftrifft, irrelevant ist.

Als kostengünstige Innenflächenbeschichtung der Hohlkammer kann Papier verwendet werden, das ein hohes Reflexionsvermögen aufweist.

Um eine besonders hohe Reflexion und eine geringe Absorption zu erreichen, ist die Verwendung einer Bariumsulfatbeschichtung der Innenfläche oder die Verwendung von optischem PTFE bevorzugt.

Ein Vorteil des erfindungsgemäßen Verfahrens besteht auch darin, dass das Verfahren auch bei hellen oder lumineszierenden Überzugsmaterialien, insbesondere Ledern, zuverlässig angewandt werden kann, da die Beobachtungseinheit Strahlung einer anderen Wellenlänge detektiert, so dass keine Lumineszenz oder sonstige Sekundärstrahlung mitgemessen wird und die Messung verfälscht.

Die Fotodiode(n) sind stationär und befinden sich vorzugsweise seitlich an der Hohlkammer und detektieren gestreute Laserstrahlung des zweiten Lasers unabhängig vom Auftreffort der Laserstrahlung in der Kammer.

Sobald die Beobachtungseinheit die Überschreitung eines Schwellwerts der in der Beobachtungseinheit gemessenen Strahlung des zweiten Laserstrahls detektiert, wird eine Abschaltung des ersten Lasers an diesem Ort bewirkt. Dies erfolgt mit einer Pulsabschaltungsvorrichtung. Die Pulsabschaltvorrichtung sollte sehr schnell sein, d.h. wenigstens 50.000 Löcher pro Sekunde überwachen können, sehr kurze Pulse mit Halbwertsbreiten von ca. 35 Nanosekunden verarbeiten können und auch zur Verarbeitung von Signalen mit einem sehr geringen Pegel von 10 mV bis 20 mV geeignet sein.

Die Schaltschwelle kann mittels eines einstellbaren Referenzpegels festgelegt werden.

Zudem sollte die Pulsabschaltvorrichtung wenigstens 10.000 Werte (entsprechend 0,6 m bei einem Lochabstand von 60 Mikrometern) speichern können.

Durch die Option zur Speicherung der Sensordaten ist darüber hinaus eine hervorragende Möglichkeit zur Qualitätssicherung der Lederbearbeitung und einem Nachweis über die erfolgreiche Bearbeitung gegeben.

Die Überschreitung eines bestimmten Schwellenwerts kann als Trigger für den Prozessabbruch genutzt werden, d. h. es wird keine weitere Laserbearbeitung an dieser Stelle des Leders mehr durchgeführt.

In einer bevorzugten Variante kann die Intensität der von der wenigstens einen Beobachtungseinheit detektierte Strahlung des zweiten Laserstrahls zur Steuerung des ersten Lasers oder des ersten Lasers und des zweiten Lasers verwendet werden.

Im Rahmen des erfindungsgemäßen Verfahrens wird vorzugsweise als erster Laser (Bearbeitungslaser) ein gepulster UV-Laser eingesetzt, wobei ein Festkörperlaser mit einer Wellenlänge von 355 nm oder ein Excimerlaser mit einer Wellenlänge von 351 nm, 308 nm oder 248 nm besonders bevorzugt ist. Die Pulszeiten sollten vorzugsweise unter 200 ns liegen. Der Strahldurchmesser beträgt 5 bis 50 Mikrometer und vorzugsweise etwa 20 Mikrometer.

Als zweiter Laser (Messlaser) kann ein Laser mit einer Wellenlänge zwischen 380 nm und 3000 nm, d.h. im VIS/IR-Bereich, eingesetzt werden. Die Wellenlänge des zweiten Lasers ist vorzugsweise zwischen 400 nm und 800 nm bzw. zwischen 1000 nm und 2200 nm, insbesondere 532 nm, 1064 nm oder zwischen 1900 nm und 2100 nm. Bei einer Wellenlänge von 532 nm oder 1064 nm kann ein Yttrium-Aluminium-Granat-Laser verwendet werden. Bei einer Wellenlänge von 1900 nm bis 2100 nm können Thulium- oder Holmium-Laser eingesetzt werden.

Der Strahldurchmesser beträgt 5 bis 50 Mikrometer und vorzugsweise etwa 20 Mikrometer.

Die Intensität des zweiten Lasers sollte so gewählt werden, dass die Strahlung des zweiten Laserstrahls einerseits möglichst gut durch das Überzugsmaterial transmittiert, andererseits das Überzugsmaterial am Auftrittsort durch den zweiten Laserstrahl nicht geschädigt oder verändert wird.

In einer weiteren Ausführungsform kann als zweiter Laserstrahl ein gepulster Laserstrahl verwendet werden. Die Pulse des zweiten Lasers, des Messlasers, können dabei gleichzeitig oder vorzugsweise zeitlich versetzt zu den Pulsen des ersten Lasers, des Bearbeitungslasers, auf das Überzugsmaterial auftreffen.

Der zeitliche Versatz und somit die Phasenverschiebung der Pulszüge des ersten und zweiten Lasers kann variieren und beispielsweise zwischen 30 ns und 10 Mikrosekunden betragen. In einer Variante trifft der Puls des zweiten Laserstrahls etwa eine Mikrosekunde vor dem Puls des ersten Laserstrahls auf das Überzugsmaterial. Hierbei können 50 kHz Laser, entsprechend einer Zeitspanne von 20 Mikrosekunden zwischen zwei Pulsen, eingesetzt werden.

Somit können die gepulsten ersten und zweiten Laser phasenverschoben betrieben werden. Dadurch wird die Genauigkeit der Messung erhöht, da die durch den nachfolgenden für den Materialabtrag notwendigen UV-Laserpuls bewirkten Sekundäreffekte (beispielsweise Partikelshielding, Plasmastrahlung, Lumineszenz) ausgekoppelt werden.

In einer weiteren Variante trifft der Puls des ersten Laserstrahls vor dem Puls des zweiten Laserstrahls auf das Überzugsmaterial.

Bevorzugt sind das Überzugsmaterial, die Beobachtungseinheit und die beiden Laser während der Bewegung der Laserstrahlen entlang der Bahn ortsfest. Dies ermöglicht, dass das Verfahren für hochdynamische Laserprozesse Anwendung finden kann, da nur die Laserstrahlen umgelenkt werden müssen.

Als Überzugsmaterial wird vorzugsweise Leder, Kunstleder oder Planware verwendet. Im Allgemeinen beträgt der Durchmesser eines mit dem Laser in das Überzugsmaterial eingebrachten Lochs vorzugsweise 5 bis 50 Mikrometer und besonders bevorzugt 10 bis 20 Mikrometer bei einem Lochabstand von 25 bis 100 Mikrometer, vorzugsweise 35 bis 60 Mikrometer. Die Löcher befinden sich auf einer Linie, die gerade, aber auch gewellt, zickzackförmig oder anders verlaufen kann.

Die mit dem erfindungsgemäßen Verfahren hergestellten Airbagbezüge zeichnen sich dadurch aus, dass die Sacklöcher nicht sichtbar und nicht fühlbar sind und der Airbagüberzug, der vorzugsweise aus Leder ist, dennoch bei definierter Kraft zerreißt. Zudem ist eine prozesssichere Wiederholbarkeit gegeben.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Darstellung des erfindungsgemäßen Verfahrens und des Aufbaus,
Figur 2 den schematischen Strahlungsverlauf in der Hohlkammer und
Figur 3 eine schematische Darstellung des Signalpegels in der Beobachtungseinheit in Abhängigkeit von der Zahl der Wiederholungen.

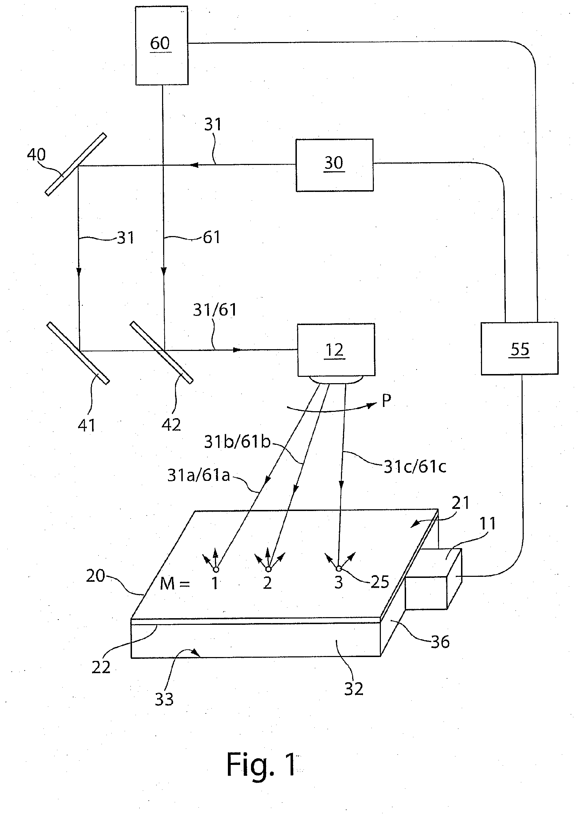

In **Figur 1** ist schematisch ein erster Laser 30, ein zweiter Laser 60, eine Beobachtungseinheit 11, eine Scanvorrichtung 12 und ein Lederstück 20 dargestellt. Die Rückseite 21 des Lederstücks 20 weist in Figur 1 nach oben. Unterhalb der Sichtseite 22 des Lederstücks 20 ist eine Hohlkammer 32, deren Innenfläche 33 mit einem reflektierenden Material beschichtet ist. In einer Seitenwand 36 der Hohlkammer 32 ist eine Fotodiode als Beobachtungseinheit 11 vorgesehen.

Der aus dem ersten Laser 30 austretende fokussierte gepulste Laserstrahl 31, dessen Strahlengang ebenfalls mit 31 bezeichnet ist, wird an einem ersten Spiegel 40 und einem zweiten Spiegel 41 reflektiert und gelangt in die Scanvorrichtung 12, die dazu dient, den Laserstrahl 31 entlang einer bestimmten Bahn 50 über das Lederstück 20 zu bewegen, wie durch den Pfeil P in der Figur 1 symbolisch dargestellt ist. Ein zweiter Laserstrahl 61 aus dem zweiten Laser 60 wird an einem semitransparenten Spiegel 42 in den Strahlengang 31 reflektiert, so dass ein gekoppelter Laserstrahl 31/61 entsteht.

Da die Laserstrahlung des ersten Lasers 30 gepulst ist und der Laserstrahl 31 über das Lederstück 20 entlang der Bahn 50 bewegt wird, wird der Laserstrahl 31/61 zunächst zu dem Ort M = 1 entsprechend dem Strahl 31a/61a bewegt, dann zu dem Ort M = 2 entsprechend dem Strahl 31b/61b und so weiter.

Bei der Bearbeitung entsteht an jedem Ort M durch den gepulsten ersten Laserstrahl 31 ein punktweiser Abtrag. Wird der Bewegungsablauf nun mit einer großen Anzahl von Wiederholungen W durchgeführt, so entsteht nach und nach an jedem Ort M des punktförmigen Abtrags ein Loch 25. Dies ist ein Sackloch 25 mit einer Restwand oder, falls der Abtragprozess lokal an diesem Abtragort nicht gestoppt wird, ein durchgängiges Loch.

Im Bereich des Leders 20 in Figur 1 sind verschiedene Orte M = 1, 2, ... auf dem Leder markiert. Ist der erste Laserstrahl 31 an einem Ort M, so trifft auch der zweite Laserstrahl 61 auf diesem Ort auf.

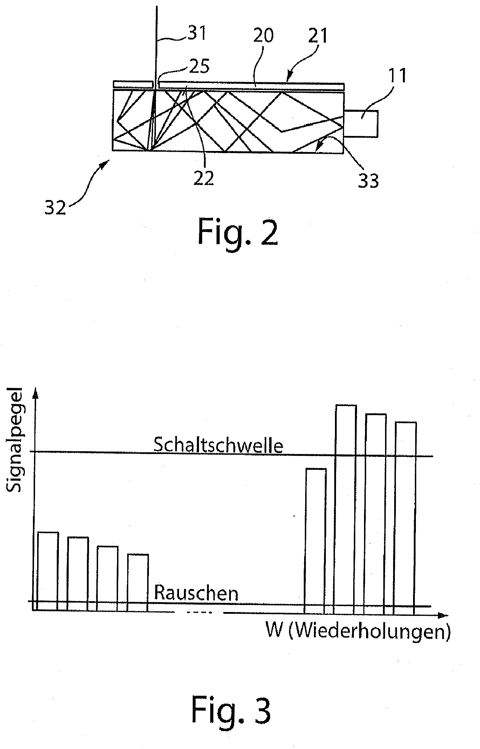

Der Durchtritt der Strahlung des zweiten Laserstrahls 61 durch das Sackloch 25 erfolgt, sobald die Dicke der Restwand im Loch 25 dünn genug ist. Das transmittierte Licht des zweiten Laserstrahls 61 gelangt nun in die Hohlkammer 32 und fällt auf deren Innenfläche 33, d.h. das Licht des zweiten Lasers, das in dem Loch 25 durch die Restwand hindurchgetreten und auf der Sichtseite ausgetreten ist, wird dort reflektiert und gelangt in einer Folge von Reflektionen in der Hohlkammer 32 auf die Beobachtungseinheit, nämlich die Fotodiode 11, wie in Figur 2 schematisch dargestellt ist.

Selbstverständlich kann das transmittierte Licht auch direkt auf eine Fotodiode 11 oder ähnlich fallen.

In **Figur 2** erkennt man auch, dass das auf die reflektierende Innenfläche 33 auftreffende transmittierte Licht des zweiten Laserstrahls 61 durch eine Vielzahl von Reflektionen und Streuungen zu einem gewissen Teil auf die Fotodiode 11 gelangt.

In **Figur 3** ist der Signalpegel der mit der Beobachtungseinheit 11 detektierten Strahlung des zweiten Lasers schematisch in Abhängigkeit von der Anzahl der Wiederholungen W dargestellt. Nachdem die Dicke der Restwand im Loch 25 zunächst noch zu groß ist und keine Strahlung transmittieren kann, wird anfänglich nur ein Rauschen detektiert. Nach einer Vielzahl von Wiederholungen W steigt der Signalpegel plötzlich an, und die Schaltschwelle wird überschritten. Das Überschreiten der Schaltschwelle wird von der Beobachtungseinheit 11 registriert und im Folgenden der Bohrprozess für dieses Sackloch 25 beendet.

Die Erfassung des Signalpegels erfolgt für jedes zu generierende Sackloch 25 während der Laserbearbeitung, so dass bei einer weiteren Abarbeitung des Bewegungsalgorithmus der Laser 30 nur noch an den Stellen der nicht ausreichend tiefen Löcher 25 zugeschaltet wird. Auch kann der Laserprozess bei einer bestimmten Anzahl von gebohrten Löchern 25 vollständig abgebrochen werden.

Da der zweite Laserstrahl 61 keine schädigende Auswirkung auf das Überzugsmaterial hat, kann der zweite Laser 60 dauerhaft eingeschaltet sein oder aber mit dem ersten Laser 30 zusammen für die entsprechenden Löcher 25 abgeschaltet werden.

## Patentansprüche

1. Verfahren zum Einbringen einer definierten Schwächungslinie durch Materialabtrag an einem Überzugsmaterial (20) zur Herstellung eines Überzugs für Airbags, wobei das Überzugsmaterial (20) eine Sichtseite (22) und eine der Sichtseite (22) gegenüberliegende Rückseite (21) aufweist, und ein gepulster erster Laserstrahl (31) aus einem ersten Laser (30) auf die Rückseite (21) des Überzugsmaterials (20) gerichtet und entlang einer Bahn (50) geführt wird und unterhalb der Sichtseite (22) des Überzugsmaterials (20) wenigstens eine Beobachtungseinheit (11) zur Überwachung des Schwächungsprozesses vorgesehen ist, wobei ein zweiter Laserstrahl (61) aus einem zweiten Laser (60) in den Strahlengang des ersten Laserstrahls (31) eingekoppelt wird, wobei der erste gepulste Laserstrahl (31) dazu dient, die Schwächungslinie zu erzeugen, **dadurch gekennzeichnet, dass** die auf der Sichtseite (22) austretende Strahlung des zweiten Laserstrahls (61) von der wenigstens einen Beobachtungseinheit (11) detektiert wird.

2. Verfahren nach Anspruch 1, **dadurch gekennzeichnet, dass** der zweite Laserstrahl (61) langwelliger als der erste Laserstrahl (31) ist.

3. Verfahren nach Anspruch 1 oder 2, **dadurch gekennzeichnet, dass** der zweite Laserstrahl (61) gepulst oder nicht gepulst ist.

4. Verfahren nach einem der vorangegangenen Ansprüche, **dadurch gekennzeichnet, dass** der erste gepulste Laserstrahl (31) aus dem ersten Laser (30) über einen Spiegel (41) und eine Scanvorrichtung (12) auf die Rückseite des Überzugsmaterials (20) fällt.

5. Verfahren nach einem der vorangegangenen Ansprüche, **dadurch gekennzeichnet, dass** der zweite Laserstrahl (61) aus dem zweiten Laser (60) über einen semitransparenten Spiegel (42) in den Strahlengang des ersten Laserstrahls (31) eingekoppelt wird.

6. Verfahren nach einem der vorangegangenen Ansprüche, **dadurch gekennzeichnet, dass** die Intensität der von der wenigstens einen Beobachtungseinheit (11) detektierte Strahlung des zweiten Laserstrahls (61) zur Steuerung des ersten Lasers (30) verwendet wird.

7. Verfahren nach einem der vorangegangenen Ansprüche, **dadurch gekennzeichnet, dass** der erste Laser (30) ein UV-Laser ist.

8. Verfahren nach einem der vorangegangenen Ansprüche, **dadurch gekennzeichnet, dass** der erste Laser (30) ein Festkörperlaser mit einer Wellenlänge von 355 nm oder ein Excimerlaser mit einer Wellenlänge von 351 nm, 308 nm oder 248 nm ist.

9. Verfahren nach einem der vorangegangenen Ansprüche, **dadurch gekennzeichnet, dass** die Wellenlänge des zweiten Lasers (60) zwischen 380 nm und 3000 nm oder zwischen 1000 nm und 2200 nm ist.

10. Verfahren nach einem der vorangegangenen Ansprüche, **dadurch gekennzeichnet, dass** die Wellenlänge des zweiten Lasers (60) zwischen 400 nm und 800 nm, insbesondere 532 nm, oder zwischen 1900 nm und 2100 nm ist.

11. Verfahren nach einem der vorangegangenen Ansprüche, **dadurch gekennzeichnet, dass** beide Laser (30, 60) gepulste Laser sind und die Laser (30, 60) phasenverschoben betrieben werden.

12. Verfahren nach einem der vorangegangenen Ansprüche, **dadurch gekennzeichnet, dass** das Überzugsmaterial (20), die Beobachtungseinheit (11) und die Laser (30, 60) während der Bewegung der Laserstrahlen (31, 61) entlang der Bahn (50) ortsfest sind.

13. Verfahren nach einem der vorangegangenen Ansprüche, **dadurch gekennzeichnet, dass** der erste Laser (30) abgeschaltet wird, sobald die wenigstens eine Beobachtungseinheit (11) die Überschreitung eines Schwellwerts der in der wenigstens einen Beobachtungseinheit (11) gemessenen Strahlung des zweiten Laserstrahls (61) detektiert.

14. Verfahren nach einem der vorangegangenen Ansprüche, **dadurch gekennzeichnet, dass** unterhalb der Sichtseite (22) des Überzugsmaterials (20) eine Hohlkammer (32) vorgesehen ist, die eine streuende und/oder reflektierende Innenfläche (33) aufweist und Hohlkammer (32) und Beobachtungseinheit (11) derart angeordnet und eingerichtet sind, dass die in die Hohlkammer (32) gelangende Laserstrahlung infolge von Reflexionen in der Hohlkammer (32) auf die Beobachtungseinheit (11) gelangt.

15. Verfahren nach Anspruch 14, **dadurch gekennzeichnet, dass** die wenigstens eine Beobachtungseinheit (11) an der Hohlkammer (32) vorgesehen ist.

## Claims

1. Method for introducing a defined weakness line by material removal on a covering material (20) for producing a cover for airbags, wherein the covering material (20) has a visible side (22) and a rear side (21) opposite the visible side (22), and a pulsed first laser beam (31) is guided from a first laser (30) towards the rear side (21) of the covering material (20) and along a track (50), and at least one observation unit (11) is provided below the visible side (22) of the covering material (20) for monitoring the weakening process, wherein a second laser beam (61) from a second laser (60) is coupled into the beam path of the first laser beam (31), wherein the first pulsed laser beam (31) serves to generate the weakness line, **characterised in that** the beam emerging on the visible side (22) of the second laser beam (61) is detected by the at least one observation unit (11).

2. Method according to claim 1, **characterised in that** the second laser beam (61) is longer-wave than the first laser beam (31).

3. Method according to claim 1 or 2, **characterised in that** the second laser beam (61) is pulsed or not pulsed.

4. Method according to one of the preceding claims, **characterised in that** the first pulsed laser beam (31) from the first laser (30) falls across a mirror (41) and a scanning device (12) onto the rear side of the covering material (20).

5. Method according to one of the preceding claims, **characterised in that** the second laser beam (61) from the second laser (60) is coupled into the beam path of the first laser beam (31) across a semi-transparent mirror (42).

6. Method according to one of the preceding claims, **characterised in that** the intensity of the radiation of the second laser beam (61) detected by the at least one observation unit (11) is used to control the first laser (30).

7. Method according to one of the preceding claims, **characterised in that** the first laser (30) is a UV laser.

8. Method according to one of the preceding claims, **characterised in that** the first laser (30) is a solid body laser having a wavelength of 355nm or an excimer laser having a wavelength of 351nm, 308nm or 248nm.

9. Method according to one of the preceding claims, **characterised in that** the wavelength of the second laser (60) is between 380nm and 3000nm or between 1000nm and 2200nm.

10. Method according to one of the preceding claims, **characterised in that** the wavelength of the second laser (60) is between 400nm and 800nm, in particular 532nm, or between 1900nm and 2100nm.

11. Method according to one of the preceding claims, **characterised in that** the two lasers (30, 60) are pulsed lasers, and the lasers (30, 60) are operated in a phase-shifted manner.

12. Method according to one of the preceding claims, **characterised in that** the covering material (20), the observation unit (11) and the lasers (30, 60) are fixed during the movement of the laser beams (31, 61) along the track (50).

13. Method according to one of the preceding claims, **characterised in that** the first laser (30) is switched off as soon as the at least one observation unit (11) detects the exceeding of a threshold value of the radiation of the second laser beam (61) measured in the at least one observation unit (11).

14. Method according to one of the preceding claims, **characterised in that** a hollow chamber (32) is provided below the visible layer (22) of the covering material (20), said hollow chamber having a scattering and/or reflecting inner surface (33) and the hollow chamber (32) and the observation unit (11) are arranged and set up in such a way that the laser radiation entering the hollow chamber (32) reaches the observation unit (11) as a result of reflections in the hollow chamber (32).

15. Method according to claim 14, **characterised in that** the at least one observation unit (11) is provided on the hollow chamber (32).

## Revendications

1. Procédé destiné à réaliser une ligne d'affaiblissement définie, et ce par enlèvement de matière au niveau d'un matériau de revêtement (20) en vue de réaliser un revêtement pour coussins gonflables, le matériau de revêtement (20) présentant une face visible (22) et une face arrière (21) située à l'opposé de la face visible (22), procédé lors duquel un premier rayon laser puisé (31) provenant d'un premier laser (30) est dirigé sur la face arrière (21) du matériau de revêtement (20) et est guidé le long d'une trajectoire donnée (50), et au moins une unité d'observation (11) est prévue au-dessous de la face visible (22) du matériau de revêtement (20) pour surveiller ledit processus d'affaiblissement, un deuxième rayon laser (61) provenant d'un deuxième laser (60) étant couplé dans le trajet du premier rayon laser (31), le premier rayon laser puisé (31) servant à réaliser la ligne d'affaiblissement, **caractérisé en ce que** le rayonnement du deuxième rayon laser (61) sortant par la face visible (22) est détecté par ladite au moins une unité d'observation (11) .

2. Procédé selon la revendication 1, **caractérisé en ce que** le deuxième rayon laser (61) présente des ondes plus longues que le premier rayon laser (31).

3. Procédé selon la revendication 1 ou 2, **caractérisé en ce que** le deuxième rayon laser (61) est un rayon laser puisé ou non pulsé.

4. Procédé selon l'une quelconque des revendications précédentes, **caractérisé en ce que** le premier rayon laser puisé (31) provenant du premier laser (30) tombe, via un miroir (41) et un dispositif scanneur (12), sur la face arrière du matériau de revêtement (20) .

5. Procédé selon l'une quelconque des revendications précédentes, **caractérisé en ce que** le deuxième rayon laser (61) provenant du deuxième laser (60) est couplé, via un miroir (42) semi-transparent, dans le trajet du premier rayon laser (31).

6. Procédé selon l'une quelconque des revendications précédentes, **caractérisé en ce que** l'intensité du rayonnement du deuxième rayon laser (61) détecté par ladite au moins une unité d'observation (11) est utilisée pour commander le premier laser (30).

7. Procédé selon l'une quelconque des revendications précédentes, **caractérisé en ce que** le premier laser (30) est un laser UV.

8. Procédé selon l'une quelconque des revendications précédentes, **caractérisé en ce que** le premier laser (30) est un laser solide ayant une longueur d'onde de 355 nm ou un laser à excimère ayant une longueur d'onde de 351 nm, de 308 nm ou de 248 nm.

9. Procédé selon l'une quelconque des revendications précédentes, **caractérisé en ce que** la longueur d'onde du deuxième laser (60) est comprise entre 380 nm et 3000 nm ou entre 1000 nm et 2200 nm.

10. Procédé selon l'une quelconque des revendications précédentes, **caractérisé en ce que** la longueur d'onde du deuxième laser (60) est comprise entre 400 nm et 800 nm, faisant en particulier 532 nm, ou est comprise entre 1900 nm et 2100 nm.

11. Procédé selon l'une quelconque des revendications précédentes, **caractérisé en ce que** les deux lasers (30, 60) sont des lasers pulsés et que lesdits lasers (30, 60) fonctionnent de manière déphasée.

12. Procédé selon l'une quelconque des revendications précédentes, **caractérisé en ce que** le matériau de revêtement (20), l'unité d'observation (11) et les lasers (30, 60) gardent leur emplacement respectif pendant que les rayons lasers (31, 61) se déplacent le long de la trajectoire (50).

13. Procédé selon l'une quelconque des revendications précédentes, **caractérisé en ce que** le premier laser (30) est mis à l'arrêt dès que ladite au moins une unité d'observation (11) détecte que le rayonnement du deuxième rayon laser (61) mesuré dans ladite au moins une unité d'observation (11) passe au-dessus d'une valeur de seuil donnée.

14. Procédé selon l'une quelconque des revendications précédentes, **caractérisé en ce qu'**au-dessous de la face visible (22) du matériau de revêtement (20) est prévue une chambre creuse (32) qui présente une surface intérieure (33) diffusante et/ou réfléchissante et **en ce que** la chambre creuse (32) et l'unité d'observation (11) sont disposées et installées de telle sorte que le rayonnement laser qui entre dans la chambre creuse (32) atteint l'unité d'observation (11) à la suite des réflexions subies dans ladite chambre creuse (32).

15. Procédé selon la revendication 14, **caractérisé en ce que** ladite au moins une unité d'observation (11) est prévue au niveau de la chambre creuse (32).
